# EUROPÄISCHE PATENTANMELDUNG

(11) **EP 0 936 459 A1**
(43) Veröffentlichungstag der Anmeldung: **18.08.1999**
(21) Anmeldenummer: 99102605.5
(22) Anmeldetag: 11.02.1999
(51) Int. Cl.: G01N 21/89, G01N 21/86

(54) **Verfahren und Vorrichtung zum Prüfen der Verklebung von Folienlagen mehrmaliger Folienbahnen**

(30) Priorität: 13.02.1998 DE 19805932
(71) Anmelder: Bähr GmbH Bremen - Industrie Technik, 28779 Bremen (DE)
(72) Erfinder: Bähr, Norbert, 28779 Bremen (DE); Kollweyh, Thorsten, 28757 Bremen (DE); Leider, Frank, 27721 Ritterhude (DE)
(74) Vertreter: von Ahsen, Erwin-Detlef

(57) **Zusammenfassung**

Insbesondere in der Verpackungstechnik werden häufig Verpackungsfolien aus mehreren Folienlagen hergestellt. Die einzelnen Folienlagen werden untereinander verklebt. Um diese Verklebung vollautomatisch prüfen und eventuelle Fehlstellen erkennen zu können, schlägt die Erfindung vor, die Folienbahn (12) mittels einem Lichtreflexionstaster (22,24) abzutasten. Dieser ist vorzugsweise in einem von 90° verschiedenen Winkel zur Bahnebene auf die Folienbahn (12) gerichtet. Fehlstellen in der Verklebung mehrerer Folienlagen der Folienbahn (12) untereinander werden so sicher erkannt.

## Beschreibung

Die Erfindung betrifft ein Verfahren und eine Vorrichtung zum Prüfen der Verklebung von Folienlagen mehrlagiger Folienbahnen, insbesondere Verpackungsfolienbahnen, untereinander.

Vor allem in der Verpackungstechnik werden sehr häufig mehrlagige Folien eingesetzt, die aus mehreren Folienlagen hergestellt sind. Die einzelnen Folienlagen sind dabei untereinander verklebt bzw. kaschiert. Sehr häufig kommen mehrlagige Folien zum Einsatz, bei der auf eine mittlere Aluminiumfolienbahn beidseitig eine transparente Kunststoffolie aufkaschiert wird. Die Aluminium-(träger-)folie oder die äußeren transparenten Kunststoffolien können dabei mit Werbeaufdrucken versehen sein.

Bei der Herstellung der mehrlagigen Folie aus den einzelnen Folienbahnen wird zunächst Klebstoff auf die einzelnen Folienlagen aufgetragen und die Folienlagen sodann miteinander vereinigt. Das Auftragen des Klebers erfolgt zumeist über eine Kleberauftragswalze, die in eine mit Klebstoff gefüllte Wanne eintaucht und über die die Folienbahn läuft. Der Kleber wird so von der Kleberauftragswalze aus der Klebstoffwanne geschöpft und auf die Folienbahn übertragen. Zum Beispiel durch einen zu geringen Klebstoffstand in der Wanne kommt es gelegentlich zu einem Abriß des Klebstoffilms auf der Folienlage, so daß die einzelnen Folienlagen nicht miteinander verklebt werden können. Dieses läßt sich aufgrund von Farbabweichungen bzw. einem veränderten Lichtrelexionsverfahren der Folienbahn erkennen. Bisher wird dieses durch eine Bedienperson überwacht, die dann Papierstreifen einlegt, während die Folienbahn zu einer Bobine gewickelt wird. Der so markierte Bereich wird anschließend manuell in einer Schneidmaschine herausgetrennt. Die Überwachung erfordert eine hohe Konzentration der Bedienperson. Fehlerhafte Klebestellen werden häufig nicht erkannt. Dieses führt zum Auschuß bei der späteren Herstellung von Verpackungen aus der Folienbahn, die mit zusätzlichen Kosten und Aufwand für den Verpackungshersteller verbunden sind. Stellt ein Verpackungshersteller daher bei nur einer Bobine einer Charge nicht erkannte Fehlstellen in der Verklebung fest, so läßt er oft die gesamte Charge zurückgehen, die dann beim Folienhersteller neu gewickelt und auf Fehlstellen überprüft werden muß.

Der vorliegenden Erfindung liegt das Problem zugrunde, ein Verfahren und eine Vorrichtung zu schaffen, durch die Fehlstellen in der Verklebung von Folienlagen einer mehrlagigen Folienbahn untereinander zuverlässig automatisch erkannt werden können.

Zur Lösung dieses Problems ist das erfindungsgemäße Verfahren dadurch gekennzeichnet, daß die Folienbahn mittels einem Lichtreflexionstaster abgetastet wird. In entsprechender Weise ist die erfindungsgemäße Vorrichtung gekennzeichnet durch einen Lichtreflexionstaster.

Die durch den Lichtreflexionstaster ermittelten Werte werden durch eine ensprechende Datenverarbeitung mit zuvor ermittelten Referenzwerten verglichen. Fehlstellen in der Verklebung können so mit einem geringen apperativen Aufwand erkannt werden. In einem nachfolgenden Schritt ist es z.B. möglich, die Signale des Lichtreflexionstasters über die Datenverarbeitung automatisch zur Steuerung einer Schneidemaschine weiterzugeleiten, wobei die Schneidemaschine den fehlerhaft verklebten Abschnitt aus der Folienbahn automatisch heraustrennt. Alternativ ist es auch möglich, daß die das Signal des Lichtreflexionstasters verarbeitende Datenverarbeitung ein entsprechendes Etikett, beispielsweise einen Barcodeaufkleber oder einen Aufkleber mit einem elektronischen Speicher, erzeugt, auf dem der fehlerhaft verklebte Bahnabschnitt anhand seiner Position in der Bahnlänge dokumentiert ist. Dieser Bahnabschnitt kann dann in einem späteren Verarbeitungsschritt, beispielsweise in der Verpackungsmaschine zur Herstellung von Verpackungen aus der Folienbahn, herausgetrennt werden.

Vorzugsweise ist der Lichtreflexionstaster in einem von 90° verschiedenen Winkel zur Bahnebene auf die Folienbahn gerichtet. Dem liegt die Erkenntnis zugrunde, daß durch Abtasten der Folienbahn unter einem spitzen, von 90° verschiedenen Winkel zur Bahnebene Einfüsse von auf sonstige Weise auf der Folienbahn eventuell vorhandenen Lichtspiegelungen vermieden werden können. Die durch Fehlstellen bedingten Farbabweichungen bzw. Abweichungen im Lichtreflexionsverhalten der Folienbahn werden so auch unter sonst schwierigen Lichtverhältnissen sicher erkannt.

Häufigste Ursache für Fehlstellen in der Verklebung der einzelnen Folienlagen untereinander ist ein zu niedriger Klebstoffstand in der Klebstoffwanne für die Klebstoffauftragswalze. Dieses hat ein Abreißen des Klebstoffilms auf der jeweiligen Folienlage über die gesamte Breite zur Folge. Es ist daher für die häufigsten Anwendungsfälle ausreichend, wenn lediglich ein feststehender Lichtreflexionstaster eingesetzt wird. Um die gesamte Bahnbreite oder zumindest einen Abschnitt derselben überwachen zu können, ist es aber vorteilhaft möglich, den Lichtreflexionstaster quer zur Transportrichtung der Folienbahn hin- und her zu bewegen. Die Folienbahn wird hierdurch zick-zack- oder wellenförmig überwacht. Auch ist es möglich, mehrere Lichtreflexionstaster über die Folienbreite verteilt nebeneinander anzuordnen. Diese können ebenfalls feststehend oder quer zur Transportrichtung der Folienbahn hin- und her bewegbar sein. Dabei können sich die von zwei Lichtreflexionstastern abgetasteten Bereiche der Folienbahn überschneiden oder gar zwei Lichtreflexionstaster gegeneinanderschwingend den gleichen Bereich abtasten.

Um die Empfindlichkeit beim Prüfen der Folienbahn entsprechend der jeweiligen Anforderungen bzw. der spezifischen Eigenschaften der jeweiligen zu prüfenden Folienbahn einstellen zu können, ist es zweckmäßig, den Abstand zwischen dem Lichtreflexionstaster und der Folienbahn und/oder den Winkel zwischen dem Lichtreflexionstaster und der Bahnebene der Folienbahn zu variieren. Dieser Fortbildung der Erfindung liegt die Erkenntnis zugrunde, daß die Lichtreflexion sich mit dem Abstand bzw. dem Winkel ändert. Es können so mit ein und derselben Anlage unterschiedlichste Folien, nämlich Folien mit starken Farbabweichungen bzw. Veränderungen im Lichtreflexionsverhalten bei Fehlstellen in der Verklebung oder Folien mit nur sehr geringen Abweichungen, geprüft werden. Die Prüfanlage ist jeweils optimal an die jeweiligen Verhältnisse anpaßbar.

Die Erfindung wird nachfolgend anhand der Zeichnungen näher erläutert. In dieser zeigen:
- Fig. 1: eine Vorrichtung mit den Erfindungsmerkmalen innerhalb einer Folien-Schneidmaschine,
- Fig. 2: eine schematische Darstellung einer Vorrichtung mit den Erfindungsmerkmalen in Seitenansicht,
- Fig. 3: eine schematische Darstellung der Vorrichtung gemäß Fig. 2 in Vorderansicht.

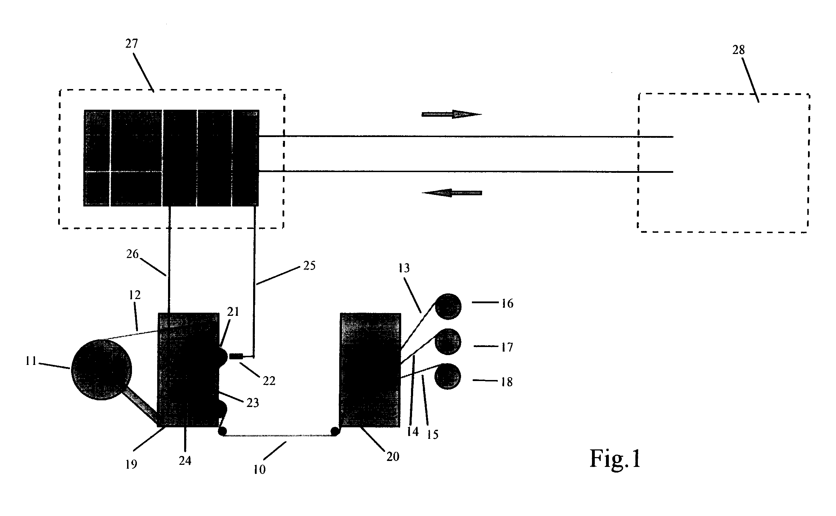

Fig. 1 zeigt eine schematische Darstellung einer FolienSchneidmaschine 10, die mit einer Vorrichtung nach den Erfindungsmerkmalen bestückt ist. Die FolienSchneidmaschine 10 dient dazu, eine zu einer Bobine 11 gewickelten, breiten Folienbahn 12 in mehrere, in vorliegendem Fall drei, Folienbahnen 13,14,15 mit einer verpackungsgerechten Breite in Längsrichtung der Folienbahn 12 aufzutrennen. Die einzelnen Folienbahnen 13,14,15 werden sodann wieder zu Bobinen 16,17,18 gewickelt. Diese Bobinen 16..18 werden letztlich von dem Folienhersteller an Verpackungshersteller geliefert.

Die Folien-Schneidmaschine 10 besteht im wesentlichen aus einer Bahnpositioniereinrichtung 19 und einer Schneideinrichtung 20. Aufgabe der Bahnpositioniereinrichtung 19 ist es, die Folienbahn 12 exakt auf die Schneideinrichtung 20 auszurichten, so daß die Folienbahn 12 exakt geschnitten werden kann. Dies geschieht mittels entsprechend bewegbarer Umlenkwalzen im Bereich der Bahnpositioniereinrichtung 19.

Im Bereich einer der Umlenkwalzen 21 der Bahnpositioniereinrichtung 19 ist ein Lichtreflexionstaster 22 zum Prüfen der Vorderseite der Folienbahn 12 angeordnet. Im Bereich einer weiteren Umlenkwalze 23 ist ein zweiter Lichtreflexionstaster 24 zum Überprüfen der Rückseite der Folienbahn 12 angeordnet. Die Lichtreflexionstaster 22,24 sind über flexible Lichtwellenleiter 25 bzw. 26 mit einer Bedienund Steuereinrichtung 27 verbunden. Diese enthält optoelektrische Wandler, die die Signale des Lichtreflexionstasters in elektrische Signale umwandeln, die dann in einer Datenverarbeitung der Bedien- und Steuereinrichtung 27 umgesetzt werden können.

Im vorliegenden Fall wird das umgesetzte Signal der Bedien- und Steuereinrichtung 27 direkt an eine Steuereinrichtung 28 für die Schneidmaschine 10 weitergeleitet. Konkret wird bei einem erkannten Fehler in der Verklebung der Folienbahn 12 ein "Notaus" der Folien-Schneidmaschine 10 ausgelöst. Der fehlerhaft verklebte Abschnitt der Folienbahn 12 kann sodann manuell herausgeschnitten werden.

Alternativ ist es auch möglich, daß von der Bedien- und Steuereinrichtung 27 ein Etikett, beispielsweise ein Barcodeaufkleber oder ein Etikett mit einem elektonischen Speicher, z. B. einem Magnetstreifen oder einem Speicherchip, erzeugt wird, auf dem die Position (Bahnlänge bis Anfang der Fehlstelle / Bahnlänge bis Ende der Fehlstelle) notiert ist. Dieses wäre insbesondere dann sinnvoll, wenn eine Vorrichtung mit den Erfindungsmerkmalen direkt in einer Kaschieranlage für die Herstellung der mehrlagigen Folienbahn 12 eingesetzt, fehlerhafte Bahnabschnitte aber erst in einer nachfolgenden Maschine, beispielsweise der vorliegenden Folien-Schneidmaschine 10, herausgetrennt werden sollen. Das Etikett, beispielsweise der Barcodeaufkleber, werden dann direkt auf die Bobine 11 mit der Folienbahn 12 geklebt und spater zur Steuerung einer Maschine, in der fehlerhafte Bahnabschnitte herausgetrennt werden, abgelesen. Dieses kann auch direkt in einer Verpackungsmaschine der Fall sein. Mit Bobinen von Verpackungsfolien betriebene Verpackungsmaschinen verfügen nämlich häufig über Einrichtungen zum automatischen Bobinenwechsel bei leergefahrener Bobine. Das Bahnende einer ablaufenden, leergefahrenen Bobine wird in solchen Einrichtungen mit dem Bahnanfang einer neuen Bobine verbunden. Eine solche Bobinenwechseleinrichtung kann vorteilhaft in modifizierter Form auch zum Heraustrennen fehlerhafter Bahnabschnitte aus der Folienbahn 12 eingesetzt werden. Kurz vor dem Anfang eines fehlerhaften Bahnabschnitts kann nämlich vorteilhaft ein Bobinenwechsel eingeleitet werden, so daß die Verpackungsmaschine auf der neuen Bobine weiterläuft. Von der alten Bobine wird sodann der fehlerhafte Bahnabschnitt abgerollt und herausgetrennt. Diese Bobine steht anschließend für einen erneuten Bahnenwechsel bereit.

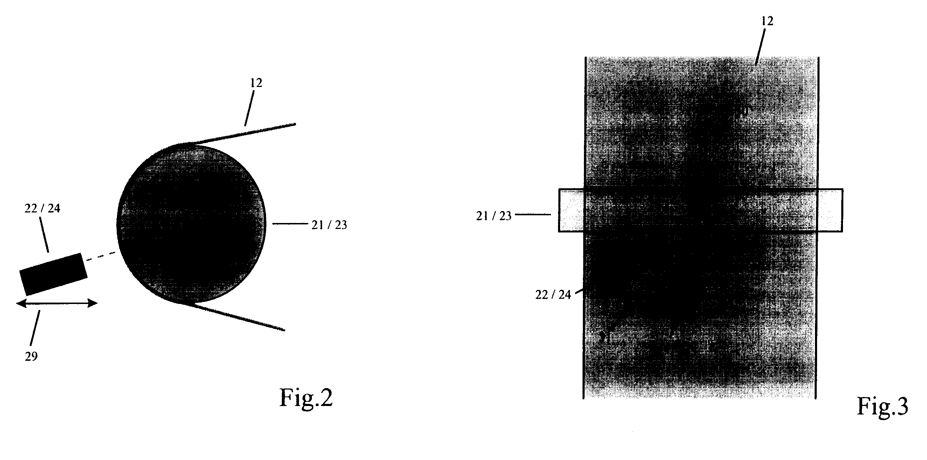

Die Fig. 2 und 3 zeigen die Vorrichtung mit den Erfindungsmerkmalen in einer etwas genaueren schematischen Darstellung. Wie durch den Doppelpfeil 29 angedeutet, kann der Abstand der Lichtreflexionstaster 22 bzw. 24 zur Folienbahn 12 variiert werden. Hierdurch wird die Empfindlichkeit der Lichtreflexionstaster 22 bzw. 24 eingestellt. Mit steigendem Abstand der Lichtreflexionstaster 22 bzw. 24 zur Folienbahn 12 nimmt dabei die Empfindlichkeit ab. Je näher die Lichtreflexionstaster 22 bzw. 24 zur Folienbahn 12 angeordnet sind, desto geringere Farbabweichungen bzw. Abweichungen im Lichtreflexionsverhalten der Folienbahn 12 werden erkannt.

Weiterhin ist es möglich, den Winkel zwischen der Transportrichtung 30 und den Lichtreflexionstastern 22 bzw. 24 zu variieren, wie dies durch den Doppelpfeil 31 angedeutet ist. Je kleiner dabei der Winkel zwischen der Transportrichtung 30 und den Lichtreflexionstastern 22 bzw. 24 ist, desto größer ist die Empfindlichkeit. Die in Fig. 3 links oben eingezeichnete Position der Lichtreflexionstaster 22 bzw. 24 entspricht somit einer niedrigen Empfindlichkeit, während die rechts unten eingezeichnete Position der Lichtreflexionstaster 22' bzw. 24' einer großen Empfindlichkeit entspricht.

Wie in Fig. 3 angedeutet, wird im vorliegenden Fall die Winkelstellung zwischen der Transportrichtung 30 und den Lichtreflexionstastern 22 bzw. 24 durch Verschwenken der Lichtreflexionstaster 22 bzw. 24 in einer zur Bahnebene parallelen Ebene eingestellt. Zusätzlich oder alternativ können die Lichtreflexionstaster 22 bzw. 24 auch in einer zur Bahnebene senkrechten Ebene verschwenkbar sein.

### Bezugszeichenliste:

- 10: Folien-Schneidmaschine
- 11: Bobine
- 12: Folienbahn
- 13: Folienbahn
- 14: Folienbahn
- 15: Folienbahn
- 16: Bobine
- 17: Bobine
- 18: Bobine
- 19: Bahnpositioniereinrichtung
- 20: Schneideinrichtung
- 21: Umlenkwalze
- 22: Lichtreflexionstaster
- 23: Umlenkwalze
- 24: Lichtreflexionstaster
- 25: Lichtwellenleiter
- 26: Lichtwellenleiter
- 27: Bedien- und Steuereinrichtung
- 28: Steuereinrichtung
- 29: Doppelpfeil
- 30: Transportrichtung
- 31: Doppelpfeil

## Patentansprüche

1. Verfahren zum Prüfen der Verklebung von Folienlagen mehrlagiger Folienbahnen (12), insbesondere Verpackungsfolienbahnen, untereinander, **dadurch gekennzeichnet,** die Folienbahn (12) mittels einem Lichtreflexionstaster (22, 24) abgetastet wird.

2. Verfahren nach Anspruch 1, dadurch gekennzeichnet, daß der Lichtreflexionstaster (22, 24) quer zur Transportrichtung (30) der Folienbahn (12) während der Abtastung hin- und herbewegt wird.

3. Verfahren nach Anspruch 1 oder 2, dadurch gekennzeichnet, daß die Folienbahn (12) mittels mehrerer über die Bahnbreite der Folienbahn (12) verteilter Lichtreflexionstaster (22, 24) abgetastet wird.

4. Verfahren nach einem der Ansprüche 1 bis 3, dadurch gekennzeichnet, daß die Empfindlichkeit des Lichtreflexionstasters (22, 24) durch Variieren des Abstandes zwischen dem Lichtreflexionstaster (22, 24) und der Folienbahn (12) und/oder des Winkels zwischen der Bahnebene der Folienbahn (12) und dem Lichtreflexionstaster (22, 24) eingestellt wird.

5. Verfahren nach einem der Ansprüche 1 bis 4, dadurch gekennzeichnet, daß sowohl die Vorder- als auch die Rückseite der Folienbahn (12) abgetastet wird.

6. Vorichtung zum Prüfen der Verklebung von Folienlagen mehrlagiger Folienbahnen (12), insbesondere Verpackungsfolienbahnen, untereinander, gekennzeichnet durch einen auf die Folienbahn (12) gerichteten Lichtreflexionstaster (22, 24).

7. Vorrichtung nach Anspruch 6, dadurch gekennzeichnet, daß der Lichtreflexionstaster (22, 24) in einem von 90° verschiedenen Winkel zur Bahnebene auf die Folienbahn (12) gerichtet ist.

8. Vorrichtung nach Anspruch 6 oder 7, dadurch gekennzeichnet, daß der Lichtreflexionstaster (22, 24) quer zur Transportrichtung (30) der Folienbahn (12) hin- und herbewegbar ist.

9. Vorrichtung nach einem der Ansprüch 6 bis 8, dadurch gekennzeichnet daß mehrere Lichtreflexionstaster (22, 24) über die Bahnbreite der Folienbahn (12) verteilt angeordnet sind.

10. Vorrichtung nach einem der Ansprüche 6 bis 9, dadurch gekennzeichnet, daß der Abstand zwischen der Folienbahn (12) und dem Lichtreflexionstaster (22, 24) und/oder der Winkel zwischen der Bahnebene der Folienbahn (12) und dem Lichtreflexionstaster (22, 24) variierbar ist.

11. Vorrichtung nach einem der Ansprüche 6 bis 10, dadurch gekennzeichnet, daß sowohl der Vorder- als auch der Rückseite der Folienbahn (12) wenigstens je ein Lichtreflexionstaster (22, 24) zugeordnet ist.
